# EUROPÄISCHE PATENTSCHRIFT

(11) **EP 0 623 898 B1**
(45) Veröffentlichungstag und Bekanntmachung des Hinweises auf die Patenterteilung: **29.07.1998**
(21) Anmeldenummer: 94104576.7
(22) Anmeldetag: 23.03.1994
(51) Int. Cl.: G07B 13/02, H01M 2/10

(54) **Taxameter**
Taximeter
Taximètre

(30) Priorität: 21.04.1993 DE 9306016 U
(43) Veröffentlichungstag der Anmeldung: 09.11.1994
(73) Patentinhaber: Mannesmann VDO AG, 60326 Frankfurt (DE)
(72) Erfinder: Schmid, Mechtilde, Dipl.-Ing., D-78052 Villingen-Schwenningen (DE); Jäckle, Holger, Dipl.-Ing., D-78628 Rottweil (DE); Koch, Siegfried, Dipl.-Ing., D-78056 Villingen-Schwenningen (DE)

(56) Entgegenhaltungen:
- EP-A- 0 505 831
- WO-A-82/02970
- DE-A- 4 034 678
- DE-C- 3 636 353
- FR-A- 2 559 289
- US-A- 3 537 909
- US-A- 4 718 742

## Beschreibung

Die Erfindung betrifft einen Taxameter gemäß dem Oberbegrift des Anspruchs 1, wie er in DE-C- 36 36 353 beschrieben ist.

Bekanntlich dienen Taxameter der Fahrpreisberechnung in Mietfahrzeugen und zwar durch Multiplikation von Strecken und Zeiteinheiten mit Werten einer örtlich festgelegten Tarifordnung. Die ermittelten Fahrpreiseinheiten werden aufsummiert und mittels einer geeigneten Anzeigeeinheit angezeigt. Andererseits werden die Anzahl der Mietaufträge, Fahrpreissummen, leer- und besetztgefahrene Strecken, Zuschlagseinnahmen und dergleichen für Abrechnungszwecke gespeichert. Letztere Daten sowie die Rechenvorgänge müssen verständlicherweise auch bei einem Ausfall der Stromversorgung des Fahrzeuges, bei erschütterungs- oder korrosionsbedingten Kontaktunterbrechungen und auch beim normalen Betrieb des Fahrzeuges entstehenden Stromversorgungslücken, beispielsweise beim Kaltstart von Dieselfahrzeugen, erhalten bleiben bzw. durchführbar sein. Das heißt, Taxameter müssen mit einer Pufferbatterie ausgerüstet sein, wobei das bisher übliche Konzept, um Manipulationen und Kurzschlüsse weitgehendst auszuschließen, vorsah, eine Pufferbatterie unmittelbar der Leiterplatte des im allgemeinen Einplatinenrechners des Taxameters zuzuordnen und dort einzulöten.

Bei diesem Konzept ist es auch nicht nötig, ein spezielles Batteriefach an dem betreffenden Taxameter vorzusehen, das zusätzlich plombiert werden muß und mehr Raum in Anspruch nimmt als die unmittelbare Anbringung der Batterie auf der Leiterplatte. Das Konzept kommt somit der Tatsache entgegen, daß Taxameter eine übersichtliche, sozusagen auf einen Blick erkennbare Anzeige und somit ein möglichst großes Anzeigefeld aufweisen sollen, andererseits aber die äußere Form von Taxametern so zu gestalten ist, daß sie eine ästhetische Integration in ein Armaturenbrett gestattet. Diese sich widersprechenden Forderungen an einen einbaufähigen Taxameter zwingen somit zu einer weitgehenden Nutzung der Frontwand bzw. Frontfläche des Taxameters durch die Anzeige und Betätigungsmittel, durch Typenschild und durch Mittel für Parametrier- und Diagnosezwecke, die ohne Ausbau des Taxameters frontseitig zugänglich sein sollen.

Mit der Anordnung der Pufferbatterie auf der Leiterplatte muß aber in Kauf genommen werden, daß die Ladungskapazität und damit auch der Platzbedarf für die Leiterplatte so groß gewählt werden muß, daß der auch bei nicht eingebautem Gerät bestehende Stromverbrauch von der betreffenden Pufferbatterie über mehrere Jahre aufgebracht werden kann. Ferner ist bei diesem Konzept ein Austausch der Batterie durch Auslöten und Einlöten umständlich und aufwendig und bei mangelnder Sorgfalt auch nicht ungefährlich für in der Nähe befindliche Bauelemente.

Ausgehend von den geschilderten Rahmenbedingungen war es das Ziel der vorliegenden Erfindung, den Aufwand für die Spannungspufferung bei Taxametern zu verringern und das Wechseln der Pufferbatterie zu vereinfachen ohne daß die Zugriffssicherheit gefährdet ist.

Die Lösung dieser Aufgabe sieht vor, daß die Parametrier- und Diagnose-Kontaktanordnung und die Pufferbatterie einander derart zugeordnet sind, daß beide über eine an der Frontwand des Taxametergehäuses vorgesehene und durch eine plombierbare Abdeckung verschließbare Öffnung zugänglich sind.

Ein bevorzugtes Ausführungsbeispiel ist dadurch gekennzeichnet, daß als Pufferbatterie wenigstens eine Knopfzelle Anwendung findet und daß die Knopfzelle derart im Gehäuse des Taxameters gehaltert ist, daß ihre Achse sich im wesentlichen in einer Parallellage zur Anzeigefläche befindet.

Erwähnenswert ist ferner, daß zur Kontaktierung der Knopfzellen mit einer die elektronischen Bauteile des Taxameters tragenden Leiterplatte vorzugsweise gleichgestaltete Kontaktfedern vorgesehen sind, daß in dem Gehäuse des Taxameters beiderseits der Fassung für die Knopfzellen Freisparungen vorgesehen sind und daß die auf der Leiterplatte befestigten Kontaktfedern durch die Freisparungen hindurchgreifen und an den eingesetzten Knopfzellen axial angreifen.

Die Erfindung bietet den Vorteil, daß an der Frontseite des Taxameters für Parametrier- und Diagnosezwecke und die Pufferbatterie nur eine Öffnung, sozusagen ein Servicefach, vorgesehen ist, welches durch eine Abdeckung verschließbar ist. Dabei wird die Abdeckung mittels einer Gehäuseschraube befestigt und durch Plombieren dieser Schraube auch gesichert. Ein Batteriewechsel kann somit ohne Ausbau des Gerätes, was erheblichen Montageaufwand bedeutet, vorgenommen werden. Das Vorsehen von nur einem Servicefach mit einem Flächenbedarf an der Frontwand des Taxameters, der keine Änderungen der Außenkonturen erfordert, wurde insbesondere dadurch ermöglicht, daß als Pufferbatterie eine oder ein Paket von relativ kleinen Knopfzellen Anwendung findet, welches, was den Batteriewechsel wesentlich erleichtert, in einer zugriffsgünstigen Position in dem Servicefach angeordnet ist.

Die Verwendung von Knopfzellen als Pufferbatterie, die Lötarbeiten vermeidet und den Entsorgungsaufwand verringert, muß selbstverständlich der im Vergleich beispielsweise zu einer Lithiumbatterie geringeren Kapazität der Knopfzellen gerecht werden, d.h. es muß der Stromverbrauch während der Lagerung des Gerätes vermieden werden. Die Knopfzellen werden dementsprechend als Zubehör dem Gerät mitgeliefert und erst beim Einbau des Taxameters in ein Kraftfahrzeug eingesetzt.

Die Art der Anordnung der Knopfzellen im Servicefach bietet, abgesehen vom leichten Zugreifen und Wechseln, den Vorteil, daß zwei gleichgestaltete Kontaktfedern verwendet werden können und die in der schalenförmigen Fassung stehenden Knopfzellen durch die Abdeckung zusätzlich diametral gehaltert werden. Dabei bietet die Verwendung eines Schrumpfschlauches für das Verbinden mehrerer Knopfzellen den zusätzlichen Vorzug der Isolation für den Fall, daß das Gehäuse des Taxameters aus einem elektrisch leitfähigen Kunststoff hergestellt ist und an Masse liegt. Erwähnenswert ist ferner, daß die gefundene Lösung auf der Leiterplatte Bestückungsfläche freimacht, andererseits einen durch die äußere Form des Gerätes gegebenen freien Raum nutzt.

Im folgenden sei die Erfindung anhand der beigefügten Zeichnungen näher erläutert. Es zeigen:

Fig. 1 einen patentgemäßen Taxameter in perspektivischer Darstellung mit einer explosiven Teildarstellung der dem Servicefach zugeordneten lösbaren Bauteile.

Fig. 2 eine Teildarstellung des in Fig. 1 dargestellten Taxameters in Draufsicht.

Fig. 3 eine Frontansicht des funktionsfertig zusammengebauten Taxameters gemäß Fig. 1.

Fig. 4 eine Schnittdarstellung gemäß dem Schnitt A in Fig. 3.

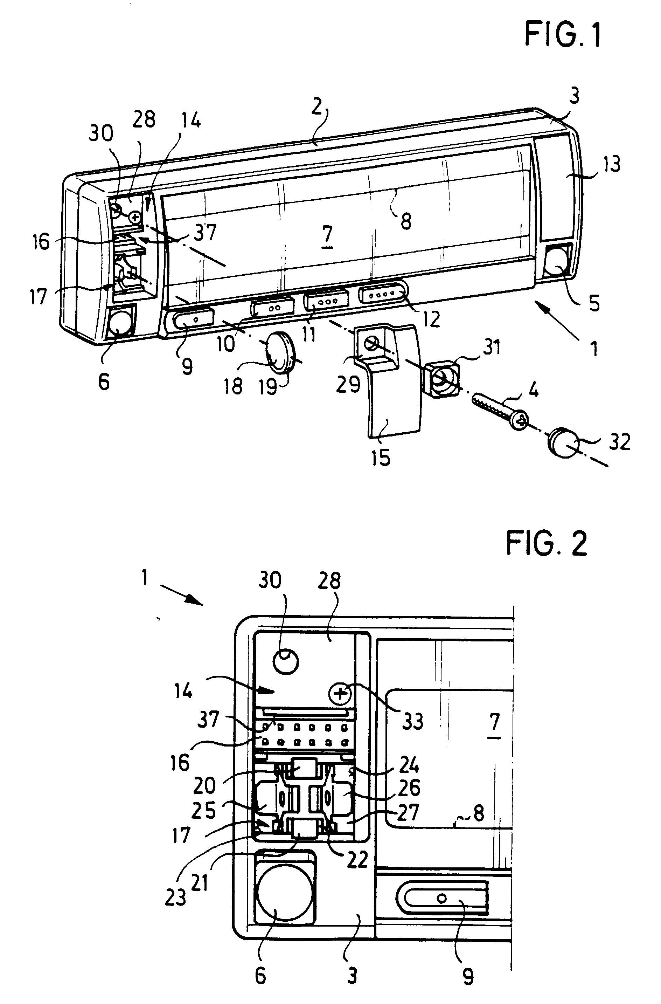

Wie die Fig. 1 zeigt, besteht das Gehäuse des Taxameters 1 aus zwei Gehäusebauteilen 2 und 3, die miteinander verschraubt sind. Eine der Schrauben ist mit 4 bezeichnet, die anderen sind durch Plombenkappen 5 und 6 verdeckt. In an sich üblicher Weise ist in dem frontseitigen Gehäusebauteil 3 eine Glasscheibe 7 eingelegt, die gleichzeitig als Schriftblatt dient und an der ein durchsichtiger Bereich 8 für die Beobachtung der Anzeigemittel des Taxameters 1 ausgeblendet ist. Mit 9, 10, 11 und 12 sind die bei Taxametern ebenfalls üblichen Steuertasten bezeichnet, während 13 ein Typenschild bzw. dessen Anbringungsfläche und 14 eine in dem frontseitigen Gehäusebauteil 3 ausgebildete, im folgenden Servicefach genannte, Öffnung bezeichnen. Die Schraube 4, die für das Verbinden der Gehäusebauteile 2 und 3 vorgesehen ist, dient zusätzlich dem Befestigen der dem Servicefach 14 zugeordneten Abdeckung 15.

Wie insbesondere aus der Fig. 2 ersichtlich ist, sind in dem Servicefach 14 eine Kontaktstiftleiste 16 und eine Fassung 17 für die Aufnahme der vorzugsweise von zwei Knopfzellen 18 gebildeten Pufferbatterie von außen zugänglich. Die Verbindung der beiden Knopfzellen 18 erfolgt mittels eines Schrumpfschlauches 19, der die Knopfzellen im Randbereich umgreift. Gleichzeitig dient der Schrumpfschlauch 19 als Isolator. Die Fassung 17 wird von zwei schalenförmig ausgebildeten Standflächen 20 und 21 mit jeweils seitlich angeformten Begrenzungswangen, von denen eine mit 22 bezeichnet ist, gebildet. Beiderseits der Fassung 17 sind Freisparungen 23 und 24 vorgesehen, die ein Eingreifen von der Pufferbatterie zugeordneten gleichgestalteten Kontaktfedern 25 und 26 in das Servicefach 14 ermöglichen. Die Kontaktfedern 25 und 26 sind, was nicht näher bezeichnet ist, in geeigneter Weise auf der Leiterplatte 27 des Taxameters 1 befestigt. Das heißt, sie stützen sich mit angeformten Lappen auf der Leiterplatte 27 ab, greifen mit gegeneinander verschränkten Fingern durch die Leiterplatte 27 durch und sind mit zugeordneten Leiterbahnen verlötet.

Der Vollständigkeit halber sei noch erwähnt, daß innerhalb des Servicefaches 14 ein Podest 28 ausgebildet ist, auf welchem die Abdeckung 15, wenn sie befestigt ist, mittels eines an ihr angeformten Fußes 29 anliegt. Mit der Schraube 4, welcher im frontseitigen Gehäusebauteil 3 eine Durchgangsbohrung 30 zugeordnet ist, wird, wie aus der Fig. 1 ersichtlich ist, zusätzlich ein Plombennäpfchen 31, mit dem eine Plombenkappe 32 rastend verbindbar ist, befestigt. Dementsprechend ist die Höhe des Podestes 28 derart bemessen, daß Plombennäpfchen 31 und Plombe 32 nach der Montage einen im wesentlichen bündigen Abschluß mit der Frontfläche des Gerätes bilden. Das mit 33 bezeichnete Symbol dient beim Einsetzen der Pufferbatterie als Potentialhinweis.

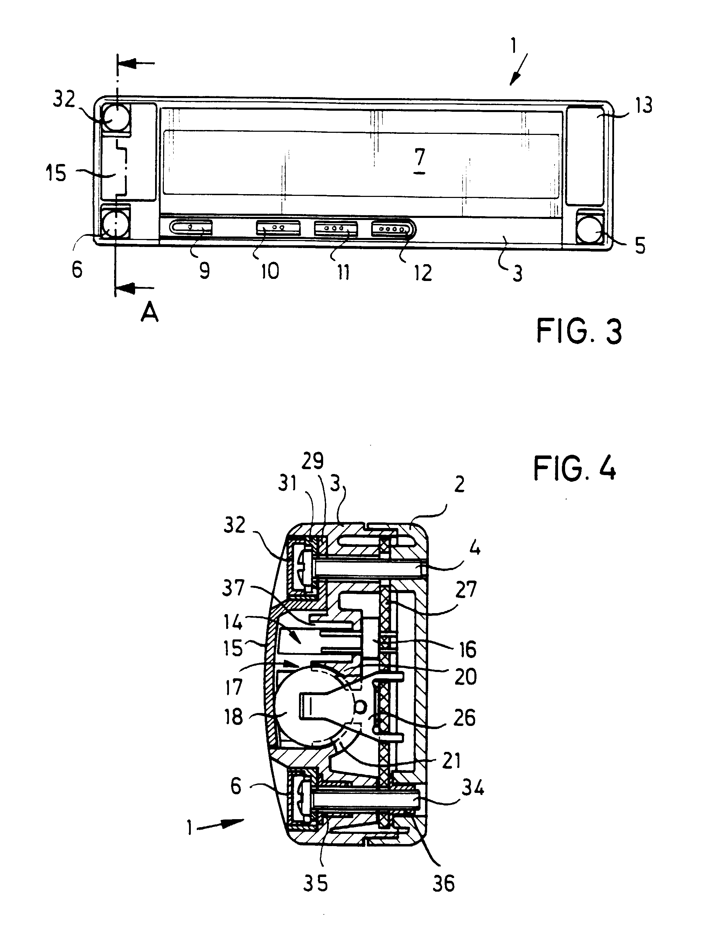

Mit der Fig. 4 wird verdeutlicht, daß die Abdeckung 15, wenn sie befestigt ist, die Pufferbatterie diametral in der Fassung 18 festhält. Ferner zeigt die Fig. 4 eine Schraube 34, welche zur Verbesserung der Massekontaktierung der beiden Gehäusebauteile 2 und 3 und der Leiterplatte 27, Buchsen 35 und 36 zugeordnet sind. Mit 37 ist eine weitere Fassung bezeichnet, die der Aufnahme eines Parametrier- und Diagnosesteckers dient. Mit anderen Worten, diese Fassung 37 bildet zusammen mit Kontaktstiften der auf der Leiterplatte 27 befestigten Kontaktstiftleiste 16 den Steckersockel für einen Parametrier- und Diagnosestecker.

## Patentansprüche

1. Taxameter mit einem elektronischen Rechner und Datenspeichern, mit einer Anzeigeeinrichtung und dieser zugeordneten Tasten zur Funktionssteuerung und zum Aufrufen von Speicherinhalten und mit einer über eine an der Frontwand des Taxametergehäuses vorgesehene und durch eine plombierbare Abdeckung (15) verschließbare Öffnung (14) frontseitig zugänglichen Kontaktanordnung,
dadurch gekennzeichnet,
daß die die Kontaktanordnung (16, 37) für Parametrier- und Diagnosezwecke vorgesehen ist,
daß eine Pufferbatterie (18) vorgesehen ist, und
daß die Kontaktanordnung (16, 37) und die Pufferbatterie (18) einander derart zugeordnet sind,
daß beide über die Öffnung (14) zugänglich sind.

2. Taxameter nach Anspruch 1,
dadurch gekennzeichnet,
daß als Pufferbatterie (18) wenigstens eine Knopfzelle Anwendung findet.

3. Taxameter nach Anspruch 2,
dadurch gekennzeichnet,
daß die Knopfzelle derart im Gehäuse des Taxameters (1) gehaltert ist, daß ihre Achse sich im wesentlichen in einer Parallellage zur Anzeigefläche befindet.

4. Taxameter nach Anspruch 1,
dadurch gekennzeichnet,
daß als Pufferbatterie (18) ein Paket aus mehreren, vorzugweise mittels eines Schrumpfschlauches (19) umfangsseitig zusammengehaltenen, Knopfzellen Anwendung findet.

5. Taxameter nach Anspruch 4,
dadurch gekennzeichnet,
daß in dem Gehäuse des Taxameters (1) eine schalenförmige Fassung (17) für die Knopfzellen ausgebildet ist,
dergestalt, daß die Einstecktiefen der Knopfzellen in bezug auf die Anzeigefläche des Taxameters (1) begrenzt ist.

6. Taxameter nach Anspruch 4,
dadurch gekennzeichnet,
daß zur Kontaktierung der Knopfzellen mit einer die elektronischen Bauteile des Taxameters tragenden Leiterplatte (27) vorzugsweise gleichgestaltete Kontaktfedern (25, 26) vorgesehen sind,
daß in dem Gehäuse des Taxameters (1) beiderseits der Fassung (17) für die Knopfzellen Freisparungen (23, 24) vorgesehen sind und
daß die auf der Leiterplatte (27) befestigten Kontaktfedern (25, 26) durch die Freisparungen (23, 24) hindurchgreifen und an den eingesetzten Knopfzellen axial angreifen.

## Claims

1. Taximeter having an electronic computer and data memories, having a display device and buttons assigned to the latter for the functional control and for calling up memory contents and having a contact arrangement which is accessible from the front via an opening (14) provided at the front wall of the taximeter housing and closable by a lead-sealable cover (15),
characterized
in that the contact arrangement (16, 37) is provided for parametrization and diagnostic purposes,
in that a back-up battery (18) is provided, and
in that the contact arrangement (16, 37) and the back-up battery (18) are assigned to one another in such a way that both are accessible via the opening (14).

2. Taximeter according to Claim 1,
characterized
in that at least one button cell is used as the back-up battery (18).

3. Taximeter according to Claim 2,
characterized
in that the button cell is held in the housing of the taximeter (1) in such a way that its axis is situated substantially in a parallel position with respect to the display area.

4. Taximeter according to Claim 1,
characterized
in that a pack comprising a plurality of button cells, preferably held together peripherally by means of a shrink-on sleeve (19), is used as the back-up battery (18).

5. Taximeter according to Claim 4,
characterized
in that a dish-shaped holder (17) for the button cells is constructed in the housing of the taximeter (1), such that the depths of insertion of the button cells in relation to the display area of the taximeter (1) is limited.

6. Taximeter according to Claim 4,
characterized
in that preferably identically designed contact springs (25, 26) are provided for establishing contact between the button cells and a printed circuit board (27) carrying the electronic components of the taximeter,
in that recesses (23, 24) are provided in the housing of the taximeter (1) on both sides of the holder (17) for the button cells and
in that the contact springs (25, 26) fastened on the printed circuit board (27) reach through the recesses (23, 24) and engage axially on the inserted button cells.

## Revendications

1. Taximètre avec un calculateur électronique et des mémoires de données, avec un dispositif d'affichage et des touches associées à ce dernier pour la commande fonctionnelle et pour l'appel de contenus de mémoire et avec un bloc de contacts accessible frontalement par l'intermédiaire d'une ouverture (14) prévue sur le panneau frontal du boîtier de taximètre et pouvant être fermée par un recouvrement plombable (15),
caractérisé par le fait
que le bloc de contacts (16, 37) est prévu à des fins de paramétrage et de diagnostic,
qu'il est prévu une batterie tampon (18) et
que le bloc de contacts (16, 37) et la batterie tampon (18) sont associés l'un à l'autre de telle sorte que les deux sont accessibles par l'intermédiaire de l'ouverture (14).

2. Taximètre selon la revendication 1,
caractérisé par le fait
que comme batterie tampon (18) est utilisée au moins une pile bouton.

3. Taximètre selon la revendication 2,
caractérisé par le fait
que la pile bouton est montée dans le boîtier du taximètre (1) de telle sorte que son axe se trouve, pour l'essentiel, dans une position parallèle par rapport à la surface d'affichage.

4. Taximètre selon la revendication 1,
caractérisé par le fait
que comme batterie tampon (18) est utilisé un paquet de plusieurs piles boutons tenues ensemble par leur pourtour au moyen d'une gaine thermorétractable (19).

5. Taximètre selon la revendication 4,
caractérisé par le fait
que dans le boîtier du taximètre (1) est réalisé un châssis-support (17) en forme de cuvette pour les piles boutons,
de telle sorte que la profondeur d'enfichage des piles boutons est limitée par rapport à la surface d'affichage du taximètre (1).

6. Taximètre selon la revendication 4,
caractérisé par le fait
que, pour la mise en contact des piles boutons avec une platine à circuits imprimés (27) portant les composants électroniques sont prévus des ressorts de contact (25, 26) de préférence de configuration identique,
que dans le boîtier du taximètre (1) sont prévus, de part et d'autre du châssis-support (17), des évidements (23, 24) pour les piles boutons et
que les ressorts de contact (25, 26) fixés sur la platine à circuits imprimés (27) s'engagent à travers lesdits évidements (23, 24) et s'appliquent axialement aux piles boutons mises en place.
